# EUROPÄISCHE PATENTANMELDUNG

(11) **EP 0 818 347 A2**
(43) Veröffentlichungstag der Anmeldung: **14.01.1998**
(21) Anmeldenummer: 97108734.1
(22) Anmeldetag: 31.05.1997
(51) Int. Cl.: B60N 2/42

(54) **Aufprallschutz in einem Kraftfahrzeug mit einem Fahrzeugsitz**

(30) Priorität: 12.07.1996 DE 19628108
(71) Anmelder: DAIMLER-BENZ AKTIENGESELLSCHAFT, 70567 Stuttgart (DE)
(72) Erfinder: Tschäschke, Ulrich, 71139 Ehningen (DE); Zerrweck, Frank, 70376 Stuttgart (DE)

(57) **Zusammenfassung**

Ein Aufprallschutz in einem Kraftfahrzeug mit einem Fahrzeugsitz weist ein aus dem oberen Bereich der Sitzlehne in den vorderen Bereich des Sitzpolsters reichendes, straffes Spannband auf, mit dem die Sitzlehne bei einem Fahrzeugcrash an einer Rückwärtsklappbewegung gehindert ist, wobei durch das Spannband ein Schutzelement seitlich am Fahrzeugsitz positioniert ist, durch welches der Aufprall einer sich beim Fahrzeugcrash zur Seite bewegenden sitzenden Person dämpfbar ist.

## Beschreibung

Die Erfindung betrifft einen Aufprallschutz in einem Kraftfahrzeug mit einem Fahrzeugsitz gemäß dem Oberbegriff des Anspruches 1.

Aus der US 5 295 729, die im Oberbegriff des Anspruches 1 berücksichtigt ist, ist ein Aufprallschutz bekannt, der ein Spannband umfaßt, welches die Sitzlehne eines Fahrzeugsitzes mit dessen Sitzfläche derart verbindet, daß die Sitzlehne bei einem Crash aufgrund des gespannten Spannbandes nicht nach rückwärts herabklappen, und eine dort sitzende Person nicht ihren den Rücken stützenden Halt verlieren kann. Eine Seitwärtsbewegung wird hier nur durch das Spannband begrenzt, wobei das Becken und der Abdominalbereich der sitzenden Person sich bei einem Fahrzeugcrash an diesem vorbeibewegen und mit großer Wucht auf Innenraumteile oder auf eine weitere, danebensitzende Person aufprallen könnten.

In der DE 44 36 139 C1 ist ein Airbagschlauch beschrieben, der in einem Sitz vertieft liegt und bei einem Fahrzeugcrash aus diesem austritt, wobei der Schlauch im Durchmesser vergrößert und in seiner Längserstreckung verkürzt wird. Einer der beiden Anschlagpunkte ist abhängig von der Neigung der Sitzlehne verschiebbar oder über ein federndes Element festgelegt. Ein derartig nachgiebiger und nachgiebig gelagerter Airbagschlauch kann natürlich die Sitzlehne nicht an einer Rückwärtsklappbewegung hindern, welche dazu führt, daß der Airbagschlauch aus seiner Schutzposition bewegt und damit wirkungslos wird. Außerdem weist der Airbagschlauch den Nachteil auf, daß er durch seine nachgiebige Festlegung der Belastung ausweichen, und die sitzende Person unter ihn rutschen kann. Um wirklich eine Seite der sitzenden Person treffend positioniert schützen zu können, müßte der Airbagschlauch im Durchmesser sehr groß ausgeführt werden, wodurch die Herstellungskosten von Airbagschlauch und Gasgenerator erhöht würden. Dieselben Nachteile haften der Ausbildung mit einem Airbagschlauch nach der EP 0 688 702 A2 an.

Zum allgemeinen Hintergrund betreffend eines Aufprallschutzes durch einen aus dem Sitz austretenden Airbag wird noch auf die Druckschriften EP 0 565 501 A1 und DE 43 07 421 A1 verwiesen. Mit diesen Ausführungen ist der Nachteil verbunden, daß ein derartiger Seitenairbag von seiner Austrittsstelle aus ein vergleichsweise großes Volumen aufweisen muß, um einen seitlichen Schutz für die sitzende Person zu bilden, wodurch auch ein großbauender Gasgenerator mit entsprechender Gaskapazität notwendig wird. Außerdem kann der Airbag bei Belastung einfach in mehreren Richtungen ausweichen und dabei seine Schutzposition verlassen.

Die Aufgabe der Erfindung besteht darin, einen gattungsgemäßen Aufprallschutz für den Schutz einer sitzenden Person bei einer crashbedingten Seitwärtsbewegung zu verbessern.

Die Aufgabe wird durch die kennzeichnenden Merkmale des Patentanspruches 1 gelöst.

Um ein Schutzelement seitlich an einem Fahrzeugsitz für die dort sitzende Person optimal positionieren zu können, muß gesichert werden, daß die Sitzlehne bei einem Crash nicht nach rückwärts klappt und dadurch die Position der sitzenden Person weitgehend verändert. Dies gewährleistet ein Spannband, welches bei einem Crash die Sitzlehne im eingestellten Winkel am Sitzpolster hält. Gleichzeitig dient dieses Spannband als sicheres Mittel, um das Schutzelement seitlich am Fahrzeugsitz zu positionieren, so daß auch dieses beim Crash nicht aus seiner Schutzposition bewegt wird, aber dennoch mit einer Längsverschiebung des gesamten Sitzes beim Einstellen durch die sitzende Person immer mitbewegt wird. Weiterhin bietet dieses zumindest im Crashfall gespannte Spannband die Möglichkeit, ein Schutzelement gezielt dort seitlich der sitzenden Person anzuordnen, wo es tatsächlich benötigt wird, so daß das Schutzelement in der Größe an die Fahrzeugbedingungen angepaßt ausgelegt werden kann.

Durch dieses Schutzelement seitlich am Fahrzeugsitz, welches durch das straffe Spannband in Position gehalten wird, wird eine sitzende Person bei einer Seitwärtsbewegung während eines Front- oder Heckaufpralles, eines Seitencrashes oder eines Fahrzeugüberschlages vor einem harten Aufprall auf die Fahrzeugseitenwand oder auf eine danebensitzende Person bewahrt.

Als kostengünstige Lösung für ein Schutzelement kann ein Fangnetz Verwendung finden, durch welches eine von Sitzlehne und Sitzpolster begrenzte Dreiecksfläche überspannt ist, und mindestens die Seite, die von der Sitzlehne zum Sitzpolster reicht, gespannt bei Crashbelastung die Sitzlehne in ihrer Position hält.

Am Spannband direkt, wie auch am durch das Spannband positionierten Fangnetz, kann vorteilhaft ein Polster als Schutzelement festgelegt werden. Es ist möglich, die Spannung im Spannband erst beim Fahrzeugcrash durch einen Seilstraffer herzustellen. Für diesen Fall ist auch eine versenkte Anordnung des Schutzelementes bis zum Crash möglich.

Das Polster kann durch einen im Crashfall aufblasbaren Airbag gebildet sein, welcher durch das Spannband oder durch das Spannband mit Netz beim Crash in seiner Schutzposition sicher gehalten wird und auch bei der Belastung durch die sitzende Person nicht ausweicht.

Von Vorteil ist zudem, daß der Airbag genau passend seitlich am Fahrzeugsitz positioniert werden kann und damit in seiner Größe gezielt für den Aufprall auslegbar ist. Damit wird unnützes Airbagvolumen eingespart, und auch die Größe des Gasgenerators oder Gasspeichers gering gehalten, weshalb dieser auch weniger Bauraum benötigt.

Der Airbag kann mehrere, miteinander gasführend verbundene Gaskammern aufweisen, die an die Aufprallsituation im Fahrzeug in Größe, Härte und Anordnung anpaßbar sind. Zudem kann der Airbag auch derart ausgebildet werden, daß er sich aufgrund seiner Form in Fahrtrichtung vor die sitzende Person ausbreitet.

Weitere Vorteile und Ausgestaltungen gehen aus den Unteransprüchen und der Beschreibung hervor.

Die Erfindung ist nachstehend anhand einer Zeichnung näher beschrieben.

Es zeigen:
- Fig. 1: in einer Seitenansicht einen Kraftwagen, mit einem die Sitzlehne mit dem Sitzpolster verbindenden, gespannten Netz, und
- Fig. 2: in einer Seitenansicht einen Sitz, mit an der gegenüberliegenden Seite in Bereitschaftsstellung liegendem Netz mit Airbags.

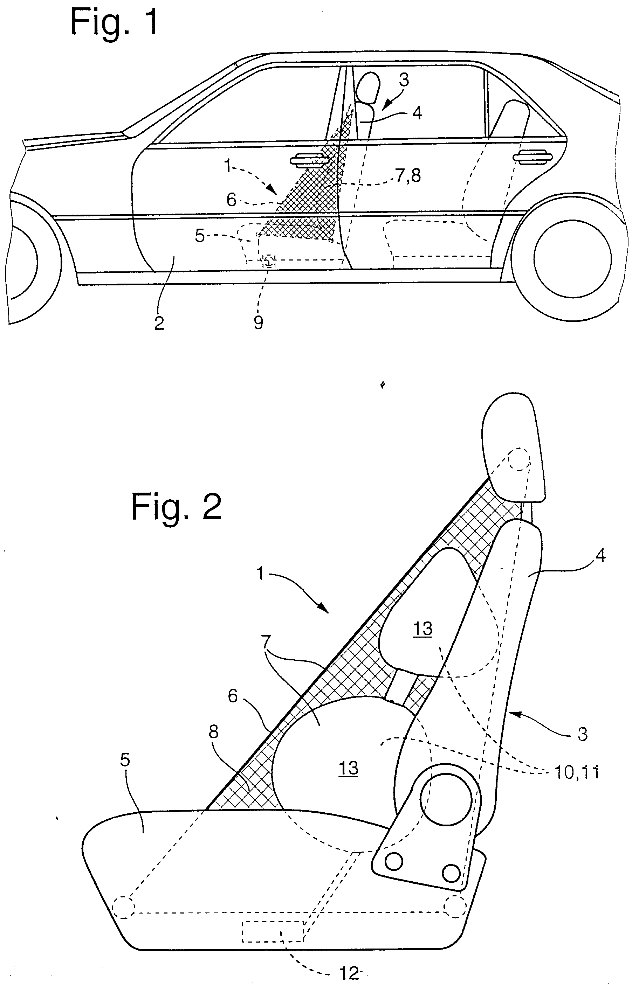

Die Fig. 1 zeigt einen Aufprallschutz 1 in einem Kraftfahrzeug 2 an einem Fahrzeugsitz 3, dessen Sitzlehne 4 bei einem Fahrzeugcrash durch ein aus dem oberen Bereich der Sitzlehne 4 in den vorderen Bereich des Sitzpolsters 5 reichendes, straffes Spannband 6 an einer Rückwärtsklappbewegung gehindert ist. Aufgrund des Spannbandes 6 wird die Sitzlehne 4 in Position gehalten, und ein durch das Spannband 6 seitlich am Fahrzeugsitz 3 positioniertes Schutzelement 7, welches hier durch ein Fangnetz 8 gebildet ist, liegt auch im Crashfall ausgerichtet fest. Durch das Schutzelement 7 wird der Aufprall einer sich beim Front- oder Heckaufprall, beim Seitencrash oder beim Überschlag des Fahrzeuges zur Seite bewegenden, sitzenden Person an die Fahrzeugseitenwand oder an eine danebensitzende Person vor allem im Becken- und Abdominalbereich gedämpft bzw. verhindert.

Das Fangnetz 8 kann zusammengefaltet seitlich am Fahrzeugsitz 3 verstaut liegen und wird dann durch das Spannband 6 zu einer von Sitzlehne 4 und Sitzpolster 5 begrenzten Dreiecksfläche aufgespannt. Das Spannband 6 wird dabei durch einen an sich bekannten Seilstraffer 9 betätigt. Des weiteren kann das Fangnetz 8 aber auch fortwährend durch das straffe Spannband 6 positioniert festliegen. Die schräg vom oberen Bereich der Sitzlehne 4 in den vorderen Bereich des Sitzpolsters 5 gespannte Seite des Fangnetzes 8 gewährleistet, daß das an den beiden anderen Seiten am Fahrzeugsitz 3 festliegende Fangnetz 8 nicht aus seiner Schutzposition gedrückt werden kann. Damit kann die sitzende Person auch nicht am Fangnetz 8 oder Spannband vorbeirutschen. Ein derartiges Fangnetz 8 ist insbesondere als preisgünstiges Schutzelement in Richtung auf eine benachbart sitzende Person von Vorteil.

Die Fig. 2 zeigt einen Fahrzeugsitz 3 von der Seite, an dessen gegenüberliegender Seite ein Fangnetz 8 durch ein Spannband 6 aufgespannt liegt. In dieser Ausführung ist am Fangnetz 8 ein Polster 10 gelagert, welches durch einen im Crashfall aufblasbaren, aus der Fahrzeugtechnik bekannten Airbag 11 gebildet ist.

Bei einem Crash oder Überschlag des Kraftfahrzeuges 2 wird das Fangnetz 8, insoweit es noch nicht gestrafft liegt, durch das seilstrafferbetätigte Spannband 6 seitlich des Fahrzeugsitzes 3 aufgespannt und gleichzeitig ein Gasgenerator 12 ausgelöst, der den Airbag 11 befüllt. Eine auf dem Sitzpolster 5 sitzende Person wird durch diese Schutzelemente 7, d.h. durch das Fangnetz 8 und den Airbag 11 vor einem harten Aufprall an die Fahrzeugseitenwand bzw. an einer danebensitzenden Person bewahrt.

Das straffe Spannband 6 hält dabei die Schutzelemente 7 in der vorbestimmten Position, so daß die sitzende Person nicht an diesen vorbeirutschen kann. Die Schutzelemente 7 sind deshalb in ihrer Größe auch genau an die Gegebenheiten im Fahrzeug anpaßbar.

Der Airbag 11 ist hierzu in zwei Gaskammern 13 aufgeteilt, die gasführend miteinander verbunden sind, und deshalb aus dem einen Gasgenerator 12 befüllt werden können.

Weiterhin ist es möglich, daß sich ein Airbag 11 aufgrund seiner Form schützend in Fahrtrichtung vor die sitzende Person ausbreitet, und daß der Airbag 11 ohne Fangnetz 8 direkt vom Spannband 6 und vom Fahrzeugsitz 3 gehalten wird.

## Patentansprüche

1. Aufprallschutz in einem Kraftfahrzeug mit einem Fahrzeugsitz, dessen Sitzlehne bei einem Fahrzeugcrash durch ein aus dem oberen Bereich der Sitzlehne in den vorderen Bereich des Sitzpolsters reichendes, straffes Spannband an einer Rückwärtsklappbewegung gehindert ist,
**dadurch gekennzeichnet,**
daß durch das Spannband (6) ein Schutzelement (7) seitlich am Fahrzeugsitz (3) positioniert ist, durch welches der Aufprall einer sich beim Fahrzeugcrash zur Seite bewegenden, sitzenden Person dämpfbar ist.

2. Aufprallschutz nach Anspruch 1,
**dadurch gekennzeichnet,**
daß ein Fangnetz (8) am Spannband (6) festgelegt ist, durch welches eine von Sitzlehne (4) und Sitzpolster (5) begrenzte Dreiecksfläche überspannt ist.

3. Aufprallschutz nach Anspruch 1,
**dadurch gekennzeichnet,**
daß am Spannband (6) als Schutzelement (7) mindestens ein Polster (10) gelagert ist.

4. Aufprallschutz nach Anspruch 2,
**dadurch gekennzeichnet,**
daß am Fangnetz (8) mindestens ein Polster (10) gelagert ist.

5. Aufprallschutz nach einem der Ansprüche 3 oder 4,
**dadurch gekennzeichnet,**
daß das Polster (10) durch einen im Crashfall aufblasbaren Airbag (11) gebildet ist.

6. Aufprallschutz nach Anspruch 5,
**dadurch gekennzeichnet,**
daß der Airbag (11) mehrere, miteinander gasführend verbundene Gaskammern (13) aufweist.

7. Aufprallschutz nach Anspruch 5,
**dadurch gekennzeichnet,**
daß sich der Airbag (11) aufgrund seiner Form in Fahrtrichtung vor der sitzenden Person ausbreitet.

8. Aufprallschutz nach Anspruch 1,
**dadurch gekennzeichnet,**
daß das Spannband (6) erst beim Fahrzeugcrash durch einen Seilstraffer (9) gespannt wird.

9. Aufprallschutz nach Anspruch 1,
**dadurch gekennzeichnet,**
daß beidseitig eines Fahrzeugsitzes (3) ein Schutzelement (7) vorgesehen ist.
